# EUROPEAN PATENT APPLICATION

(11) **EP 1 424 763 A1**
(43) Date of publication of application: **02.06.2004**
(21) Application number: 02026200.2
(22) Date of filing: 26.11.2002
(51) Int. Cl.: H02K 5/173

(54) **Ball bearing fixing structure**

(71) Applicant: Sunonwealth Electric Machine Industry Co., Ltd., Kaohsiung, Taiwan R.O.C. (TW)
(72) Inventor: Horng, Alex, Kaohsiung, Taiwan R.O.C (TW); Yin, Tso-Kuo, ang, Kaohsiung Hsien,Taiwan R.O.C (TW); Hsieh, Chi-Hung, Hsiang,Kaohsiung Hsien, Taiwan R.O.C (TW)
(74) Representative: LOUIS- PÖHLAU- LOHRENTZ

(57) **Abstract**

A ball bearing fixing structure includes a ball bearing having an outer periphery and an inner periphery, a first member having an inner periphery bonded by an adhesive to the outer periphery of the ball bearing, and a second member having an outer periphery bonded by the adhesive to the inner periphery of the ball bearing. At least one of the inner periphery of the first member and the outer periphery of the second member includes at least one fixing section for accumulating the adhesive.

## Description

### Background of the Invention

### 1. Field of the Invention

The present invention relates to a ball bearing fixing structure. In particular, the present invention relates to a ball bearing fixing structure for bonding the inner and outer peripheries of the ball bearing by fixing sections.

### 2. Description of the Related Art

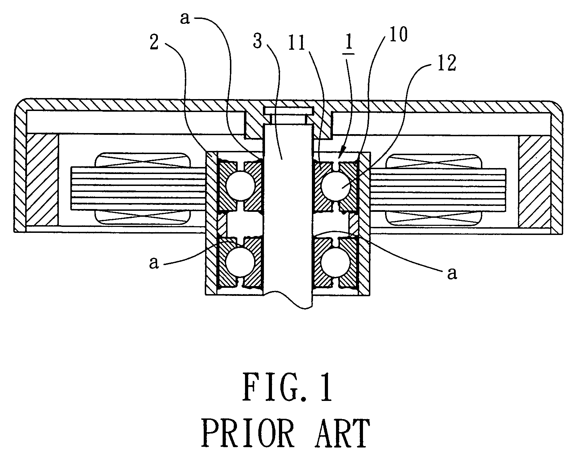

Fig. 1 of the drawings illustrates a conventional ball bearing 1 including an outer race 10, and an inner race 11, and a plurality of balls 12. The outer race 10 and the inner race 11 are engaged with each other with the balls 12 mounted therebetween to thereby allow smooth relative rotation between the outer race 10 and the inner race 11. In use, the ball bearing 1 is mounted between, e.g., an axle tube 2 and a rotatable shaft 3 of, e.g., a rotor of a motor. Thus, the rotatable shaft 3 may rotate freely relative to the axle tube 2. To prevent disengagement or loosening, an outer periphery of the ball bearing 1 is bonded by adhesive to an inner periphery of the axle tube 2, and an inner periphery of the ball bearing 1 is bonded to the outer periphery of the rotatable shaft 3.

Nevertheless, it is not uncommon that excessive adhesive on the inner periphery and/or the outer periphery overflows and thus contaminates the elements of this motor. As a result, a contaminated layer or zone "a" is found on each of two ends of the ball bearing 1. In some cases, the contaminated zones reach the space between the ball bearings 12 and the inner and outer races 10 and 11. The smooth rotation of the balls 12 is adversely affected, rotational noise occurs, and the life of the ball bearing 1 is shortened. On the other hand, reliable bondage could not be obtained if the amount of adhesive on the inner and outer peripheries of the ball bearing 1 is insufficient. This would cause loosening of the elements of this motor and thus fail to withstand rotation of the rotatable shaft 3.

### Summary of the Invention

It is an object of the present invention to provide a ball bearing fixing structure having a ball bearing, the ball bearing having an inner periphery and an outer periphery that are bonded through fixing sections. The fixing sections receive excessive adhesive to avoid overflow or insufficiency of the adhesive.

It is another object of the present invention to provide a ball bearing fixing structure having a ball bearing, the ball bearing having an inner periphery and an outer periphery that are bonded through fixing sections. The fixing sections improve the bonding strength and thus provide a reliable structure.

A ball bearing fixing structure in accordance with the present invention includes a ball bearing having an outer periphery and an inner periphery, a first member having an inner periphery bonded by an adhesive to the outer periphery of the ball bearing, and a second member having an outer periphery bonded by the adhesive to the inner periphery of the ball bearing. At least one of the inner periphery of the first member and the outer periphery of the second member includes at least one fixing section for accumulating the adhesive.

The fixing section may be an annular groove or a recessed portion for accumulating the adhesive and for increasing the bonding area that results in improved bonding strength.

Other objects, specific advantages, and novel features of the invention will become more apparent from the following detailed description and preferable embodiments when taken in conjunction with the accompanying drawings.

### Brief Description of the Drawings

Fig. 1 is a sectional view of a conventional ball bearing.
Fig. 2 is an exploded perspective view of a ball bearing fixing structure in accordance with the present invention.
Fig. 3 is a sectional view of the ball bearing fixing structure in Fig. 2.
Fig. 4 is an enlarged view of a circled portion of Fig. 3.

### Detailed Description of the Preferred Embodiments

A preferred embodiment in accordance with the present invention will now be described with reference to the accompanying drawings.

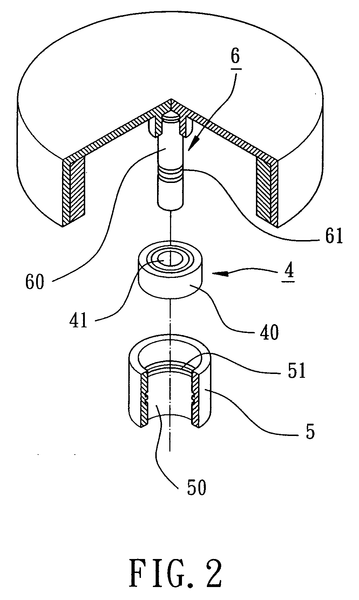

Referring to Fig. 2, a ball bearing fixing structure in accordance with the present invention generally includes a ball bearing 4, a first member 5, and a second member 6. The ball bearing 4 includes an inner periphery 40 and an outer periphery 41 for respectively engaging with the first member 5 and the second member 6, thereby allowing relative free rotation between the first member 5 and the second member 6.

The first member 5 may be an axle tube or a stator and includes an inner periphery 50 and a first fixing section 51. The first fixing section 51 is located on a predetermined position and extends along the inner periphery 50 of the first member 5. The second member 6 may be a rotatable shaft of a rotor and includes an outer periphery 60 and a second fixing section 61. The second fixing section 61 is located on a predetermined position and extends along the outer periphery 60 of the second member 6. The first and second fixing sections 51 and 61 are preferably annular grooves for accumulating adhesive. Alternatively, the first and second fixing sections 51 and 61 are recessed portions for accumulating adhesive.

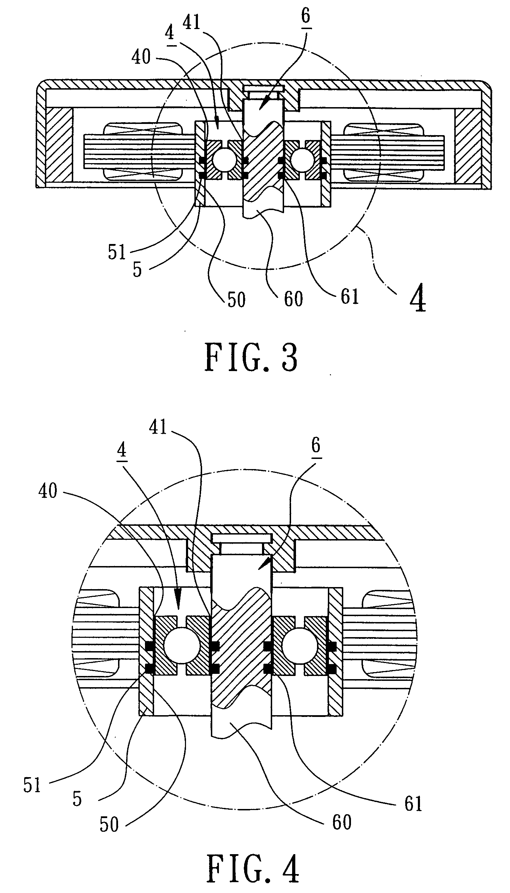

Referring to Figs. 3 and 4, in assembly, the ball bearing 4 is mounted between the first member 5 and the second member 6 with the first fixing section 51 facing the outer periphery 41 of the ball bearing 4 and with the second fixing section 62 facing the inner periphery 40 of the ball bearing 4. In order to fixing these members, the outer periphery 41 of the ball bearing 4 is bonded by an adhesive to the first fixing section 51 of the first member 5, and the inner periphery 40 of the ball bearing 4 is bonded by adhesive to the second fixing section 61 of the second member 6.

As illustrated in Figs. 3 and 4, after assembly, the adhesive on the outer periphery 41 of the ball bearing 4 is accumulated in the first fixing section 51 of the first member 5 to thereby improve the bonding strength. Likewise, the adhesive on the inner periphery 40 of the ball bearing 4 is accumulated in the second fixing section 61 of the second member 6 to thereby increase the bonding area that results in improved bonding strength. In other words, the adhesive on the outer periphery 41 and the adhesive on the inner periphery 40 of the ball bearing 4 may withstand high-speed rotation of the second member 6 relative to the first member 5. Thus, the ball bearing 4 may be used with high-speed rotation of motors.

Compare Fig. 1 with Fig. 4, the conventional ball bearing 1 risks the contaminated zones "a" on two ends thereof resulting from overflow of adhesive, which would adversely affect smooth rotation of the ball bearing 1 and generate rotational noise, while overflow of adhesive is avoided and the bonding strength of the members is improved in the ball bearing 4 in accordance with the present invention by means of providing the first and second fixing portions 51 and 61.

Although the invention has been explained in relation to its preferred embodiment as mentioned above, it is to be understood that many other possible modifications and variations can be made without departing from the scope of the invention. It is, therefore, contemplated that the appended claims will cover such modifications and variations that fall within the true scope of the invention.

## Claims

1. A ball bearing fixing structure comprising:
a ball bearing including an outer periphery and an inner periphery;
a first member including an inner periphery bonded by an adhesive to the outer periphery of the ball bearing; and
a second member including an outer periphery bonded by the adhesive to the inner periphery of the ball bearing;
at least one of the inner periphery of the first member and the outer periphery of the second member including at least one fixing section for accumulating the adhesive.

2. The ball bearing fixing structure as claimed in claim 1, wherein said at least one fixing section is provided on each of the inner periphery of the first member and the outer periphery of the second member.

3. The ball bearing fixing structure as claimed in claim 1, wherein the first member is an axle tube.

4. The ball bearing fixing structure as claimed in claim 1, wherein the second member is a rotatable shaft.

5. The ball bearing fixing structure as claimed in claim 1, wherein said at least one fixing section is an annular groove.

6. The ball bearing fixing structure as claimed in claim 1, wherein said at least one fixing section is a recessed portion.
